# EUROPEAN PATENT SPECIFICATION

(11) **EP 2 652 941 B1**
(45) Date of publication and mention of the grant of the patent: **14.06.2017**
(21) Application number: 11802620.2
(22) Date of filing: 13.12.2011
(51) Int. Cl.: H04N 5/372, H04N 5/355, H04N 5/243

(54) **IMAGE SENSOR WITH CHARGE MULTIPLICATION**
BILDSENSOR MIT ZUR LADUNGSVERVIELFACHUNG
CAPTEUR D'IMAGE AVEC MULTIPLICATION DE CHARGES

(30) Priority: 14.12.2010 US 967299; 14.12.2010 US 967428
(43) Date of publication of application: 23.10.2013
(60) Divisional application: 13182922.8
(73) Proprietor: Semiconductor Components Industries, LLC, Phoenix, AZ 85008 (US)
(72) Inventor: PARKS, Christopher, Rochester, NY 14615 (US)
(74) Representative: Clarke, Geoffrey Howard
(86) International application number: PCT/US2011/064527
(87) International publication number: WO 2012/082676

(56) References cited:
- WO-A1-2010/087288
- WO-A2-02/058157
- US-A1- 2008 239 129

## Description

### CROSS-REFERENCE TO RELATED APPLICATIONS

This application claims the benefit of and priority to U.S. Patent Application Serial No. 12/967,428, filed December 14, 2010, and U.S. Patent Application Serial No. 12/967,299, filed December 14, 2010, the entire disclosures of which are hereby incorporated herein by reference.

### TECHNICAL FIELD

The present invention relates to image sensors for use in digital cameras and other types of image capture devices, and more particularly to Charge Coupled Device (CCD) image sensors. Still more particularly, the present invention relates to charge multiplication in CCD image sensors.

### BACKGROUND

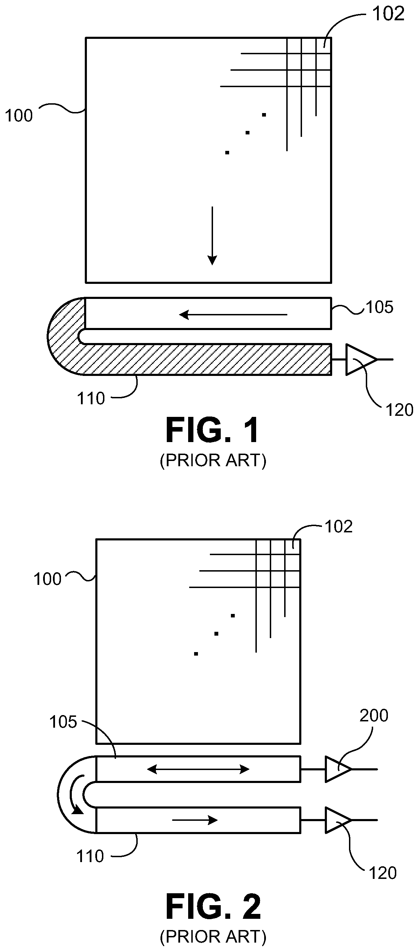

**FIG. 1** depicts a simplified block diagram of a first CCD image sensor that performs charge multiplication in accordance with the prior art. Pixel array 100 includes vertical charge-coupled device (CCD) shift registers (not shown) that shift charge packets from a row of pixels 102 one row at a time into low voltage horizontal CCD (HCCD) shift register 105. Low voltage HCCD shift register 105 serially shifts the charge packets into a high voltage charge multiplying HCCD shift register 110. Charge multiplication occurs in charge multiplying HCCD shift register 110 through the application of large electric fields to the gate electrodes (not shown) overlying HCCD shift register 110 during charge transfer. The large electric fields produce a signal larger than originally collected in the pixels in pixel array 100. The large electric fields are created by overdriving the gate electrodes over the extended HCCD shift register 110 with sufficiently larger voltages. Typically, charge multiplying HCCD shift register 110 can multiply the number of charge carriers in each charge packet by a factor of two to one thousand. The multiplied charge packet output at the end of charge multiplying HCCD shift register 110 is sensed and converted into a voltage signal by output amplifier 120.

A conventional output amplifier can have a minimum noise level of eight charge carriers, meaning the output amplifier is unable to detect a signal when a charge packet contains less than eight charge carriers. One advantage of a multiplying HCCD shift register 110 is the ability to amplify or multiple charge packets that would not normally be detected by an output amplifier. For example, a charge multiplying HCCD shift register can take an input of just one undetectable charge carrier (e.g., electron) and convert it to a larger detectable group of one thousand charge carriers. The output amplifier is now able to detect the charge packet and convert the charge packet to a voltage signal.

One drawback to a charge multiplying HCCD shift register is its dynamic range. If the charge packet entering the multiplying HCCD shift register has two hundred charge carriers and if the gain is one thousand, the two hundred charge carriers are multiplied to 200,000 charge carriers. Many charge multiplying HCCD shift registers are unable to hold 200,000 or more charge carriers, and the charge carriers bloom (spread out) into the pixels adjacent to the HCCD shift register. When the capacity of the charge multiplying HCCD shift register is 200,000 charge carriers and the gain is one thousand, the maximum signal that can be measured by a charge multiplying HCCD shift register is 200 charge carriers with a noise floor of one charge carrier. That is a dynamic range of 200 to 1. To illustrate how poor that dynamic range is, an output amplifier with a minimum noise level of eight electrons can easily measure charge packets containing 32,000 charge carriers for a dynamic range of 4000 to 1.

To overcome this limitation, prior art CCD image sensors (see **FIG. 2**) have added a second output amplifier 200 to HCCD shift register 105. If the image is known to contain charge packets too large for the charge multiplying HCCD shift register 110, the charge packets are serially shifted through HCCD shift register 105 to output amplifier 200 instead of towards the charge multiplying HCCD shift register 110. One disadvantage to this implementation is the entire image must be read out of either output amplifier 200 or output amplifier 120. If an image contains both bright and dark regions, the image must be read out of output amplifier 200 so the bright regions do not bloom (flood) the charge multiplying HCCD shift register 110. But when the entire image is read out of output amplifier 200, dark regions in the image are not shifted through the charge multiplying HCCD shift register and do not receive the benefit of charge multiplying HCCD shift register 110.

### SUMMARY

An image capture device according to the present invention is defined in claim 1. An image sensor includes a horizontal shift register electrically connected to a pixel array for receiving charge packets from the pixel array. A non-destructive sense node is connected to an output of the horizontal shift register. A charge directing switch is electrically connected to the non-destructive sense node. The charge directing switch includes two outputs. A charge multiplying horizontal shift register is electrically connected to one output of the charge directing switch. A bypass horizontal shift register or an amplifier can be connected to the other output of the charge directing switch.

A pipeline delay horizontal shift register can be connected between the non-destructive sense node and the charge directing switch. An extended horizontal shift register can be connected between the charge directing switch and the input of the charge multiplying horizontal shift register. Amplifiers can be connected to the non-destructive sense node, the output of the bypass horizontal shift register, and the output of the charge multiplying shift register.

The image sensor is included in the image capture device. The image capture device can include correlated double sampling (CDS) units connected to the outputs of the amplifiers. The CDS units can each include an analog-to-digital converter. A computing device receives a digital pixel signal produced by the non-destructive sense node for each charge packet output from the horizontal shift register. The computing device produces a switch signal that is received by the charge directing switch and causes the charge directing switch to direct a charge packet to the charge multiplying horizontal shift register when the number of charge carriers in the charge packet will not saturate the charge multiplying horizontal shift register. The charge directing switch directs a charge packet to the bypass horizontal shift register or amplifier connected to the other output of the charge directing switch when the charge packet will saturate the charge multiplying horizontal shift register.

The amplifier connected to the non-destructive sense node and the CDS unit connected to the amplifier combined form a charge sensing output channel having a combined charge to voltage conversion gain value G 1. The amplifier electrically connected to one output of the charge directing switch and the CDS unit connected to the amplifier combined form a charge bypass output channel having a combined charge to voltage conversion gain value G2. The amplifier connected to the output of the charge multiplying horizontal shift register and the CDS unit connected to the amplifier combined form a charge multiplying output channel having a combined charge to voltage conversion gain value G3. A method for producing an image includes selecting a pixel signal produced by either the charge sensing output channel, the charge multiplying output channel or the charge bypass output channel. If the pixel signal produced by the charge sensing output channel is selected, applying a gain factor (G3/G1) to each pixel signal selected from the charge bypass output channel. If the pixel signal produced by the charge bypass output channel is selected, applying a gain factor (G3/G2) to each pixel signal selected from the charge bypass output channel. The image is produced by combining the selected pixel signals.

A method for producing an image sensor, according to an example, includes providing a horizontal shift register electrically connected to a pixel array for receiving charge packets from the pixel array. A non destructive sense node is provided that is connected to an output of the horizontal shift register. A charge directing switch is provided that is electrically connected to the non destructive sense node. The charge directing switch includes first and second outputs. A
charge multiplying horizontal shift register is provided that is electrically connected to the first output of the charge directing switch. A bypass horizontal shift register or an amplifier is provided that is connected to the second output of the charge directing switch. A method for producing an image capture device further includes providing a computing device that is electrically connected to the charge directing switch, where the computing device is operable to transmit a switch signal to the charge directing switch in response to a signal received from the non-destructive sense node.

US 2008/0239129 discloses an image sensor with separate branch transfer paths for transferring charge in succession from either a low illumination charge multiplying path 74 or a high illumination charge transfer path 75 and processes the final image using the output of both paths. US2011/0273603 A1 discloses an image sensor which collects charge from a frame and measures the illumination in the frame to determine a multiplication factor to apply to a multiplication register for all charge packets in the frame. WO 02/058157 discloses an image sensor that uses a multiplication register and an additional register to prevent saturating the multiplication register for high illumination scenes.

### BRIEF DESCRIPTION OF THE DRAWINGS

Embodiments of the invention are better understood with reference to the following drawings. The elements of the drawings are not necessarily to scale relative to each other.
FIG. 1 depicts a simplified block diagram of a first CCD image sensor that performs charge multiplication in accordance with the prior art;
FIG. 2 depicts a simplified block diagram of a second CCD image sensor that performs charge multiplication in accordance with the prior mt;
FIG. 3 is a simplified block diagram of an image capture device in an embodiment in accordance with the invention;
**FIG. 4** is a simplified block diagram of a first CCD image sensor suitable for use as image sensor 306 shown in **FIG. 3** in an embodiment in accordance with the invention;
**FIG. 5** is a simplified block diagram of a second CCD image sensor suitable for use as image sensor 306 shown in **FIG. 3** in an embodiment in accordance with the invention;
**FIG. 6** depicts a simplified top view of charge directing switch 414 shown in **FIG. 4** in an embodiment in accordance with the invention;
**FIG. 7** depicts an exemplary timing diagram for charge directing switch 414 shown in **FIGS. 4** and **5****;**
**FIG. 8** illustrates an exemplary timing diagram for charge directing switch 414 shown in **FIGS. 4** and **5****;**
**FIG. 9** is a flowchart of a method for operating an image sensor in an embodiment in accordance with the invention;
**FIG. 10** is a flowchart of a method for producing an image that can be used with the embodiment shown in **FIGS. 4** and **5****;**
**FIG. 11** is an exemplary diagram that is used to illustrate how the signals output from the three output channels are combined to produce an image in an embodiment in accordance with the invention; and
**FIG. 12** is a flowchart of a method for producing an image sensor in an embodiment in accordance with the invention.

### DETAILED DESCRIPTION

Throughout the specification and claims, the following terms take the meanings explicitly associated herein, unless the context clearly dictates otherwise. The meaning of "a," "an," and "the" includes plural reference, the meaning of "in" includes "in" and "on." The term "connected" means either a direct electrical connection between the items connected, or an indirect connection through one or more passive or active intermediary devices. The term "circuit" means either a single component or a multiplicity of components, either active or passive, that are connected together to provide a desired function. The term "signal" means at least one current, voltage, charge, or data signal.

Additionally, the term "substrate" is to be understood as a semiconductor-based material including, but not limited to, silicon, silicon-on-insulator (SOI) technology, silicon-on-sapphire (SOS) technology, doped and undoped semiconductors, epitaxial layers or well regions formed on a semiconductor substrate, and other semiconductor structures.

Referring to the drawings, like numbers indicate like parts throughout the views.

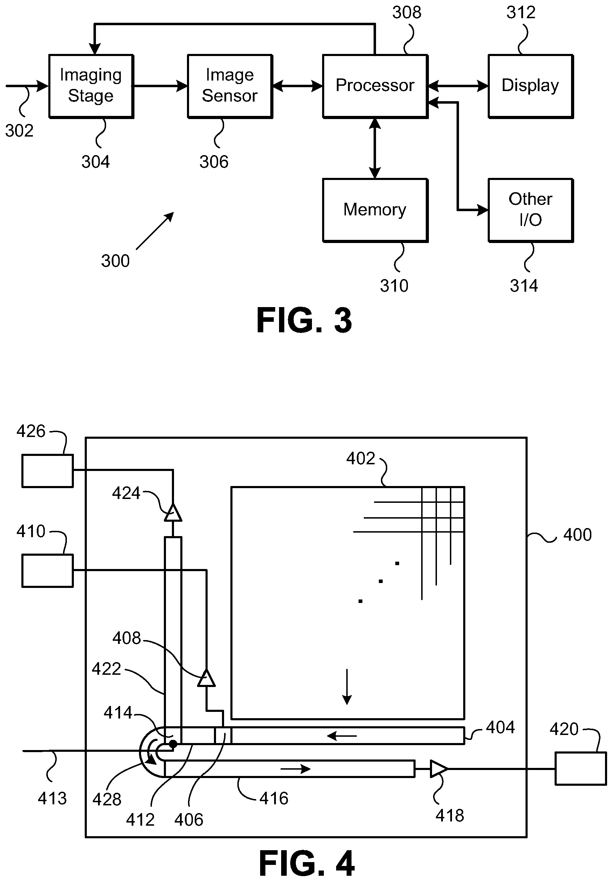

**FIG. 3** is a simplified block diagram of an image capture device in an embodiment in accordance with the invention. Image capture device 300 is implemented as a digital camera in **FIG. 3****.** Those skilled in the art will recognize that a digital camera is only one example of an image capture device that can utilize an image sensor incorporating the present invention. Other types of image capture devices, such as, for example, cell phone cameras and digital video camcorders, can be used with the present invention.

In digital camera 300, light 302 from a subject scene is input to an imaging stage 304. Imaging stage 304 can include conventional elements such as a lens, a neutral density filter, an iris and a shutter. Light 302 is focused by imaging stage 304 to form an image on image sensor 306. Image sensor 306 captures one or more images by converting the incident light into electrical signals. Digital camera 300 further includes processor 308, memory 310, display 312, and one or more additional input/output (I/O) elements 314. Although shown as separate elements in the embodiment of **FIG. 3****,** imaging stage 304 may be integrated with image sensor 306, and possibly one or more additional elements of digital camera 300, to form a compact camera module.

Processor 308 may be implemented, for example, as a microprocessor, a central processing unit (CPU), an application-specific integrated circuit (ASIC), a digital signal processor (DSP), or other processing device, or combinations of multiple such devices. Various elements of imaging stage 304 and image sensor 306 may be controlled by timing signals or other signals supplied from processor 308.

Memory 310 may be configured as any type of memory, such as, for example, random access memory (RAM), read-only memory (ROM), Flash memory, disk-based memory, removable memory, or other types of storage elements, in any combination. A given image captured by image sensor 306 may be stored by processor 308 in memory 310 and presented on display 312. Display 312 is typically an active matrix color liquid crystal display (LCD), although other types of displays may be used. The additional I/O elements 314 may include, for example, various on-screen controls, buttons or other user interfaces, network interfaces, or memory card interfaces.

It is to be appreciated that the digital camera shown in **FIG. 3** may comprise additional or alternative elements of a type known to those skilled in the art. Elements not specifically shown or described herein may be selected from those known in the art. As noted previously, the present invention may be implemented in a wide variety of image capture devices. Also, certain aspects of the embodiments described herein may be implemented at least in part in the form of software executed by one or more processing elements of an image capture device. Such software can be implemented in a straightforward manner given the teachings provided herein, as will be appreciated by those skilled in the art.

Referring now to **FIG. 4****,** there is shown a simplified block diagram of a first CCD image sensor suitable for use as image sensor 306 shown in **FIG. 3** in an embodiment in accordance with the invention. Image sensor 400 can be implemented as any type of CCD image sensor, including, but not limited to, an interline CCD image sensor and full frame image sensor.

Image sensor 400 includes pixel array 402 having vertical shift registers (not shown) that shift charge packets from each row of pixels into horizontal shift register 404. Horizontal shift register 404 is implemented as a low voltage horizontal charge-coupled device (CCD) shift register in an embodiment in accordance with the invention. Horizontal shift register 404 serially shifts each charge packet towards non-destructive sense node 406. Non-destructive sense node 406 is implemented as a non-destructive floating gate sense node in an embodiment in accordance with the invention.

The voltage on non-destructive sense node 406 is input into amplifier 408. The output of output amplifier 408 is connected to output circuit 410. Output amplifier 408 and output circuit 410 together form a "charge sensing output channel". Output circuit 410 is implemented as a correlated double sampling (CDS) unit in an embodiment in accordance with the invention. The CDS unit can be configured in any one of various circuit implementations. By way of example only, a CDS unit can be configured to subtract the double samples (e.g., reset and image samples) in the analog domain and pass the result to an analog-to-digital converter. As another example, a CDS unit that is available from Analog Devices, part number AD9824, can be used for a CDS unit. The CDS unit may also be configured to digitally convert both samples and subtract the double samples in the digital domain as in United States Patent 5,086,344.

Typically, an output circuit that includes an analog-to-digital converter has a pipeline processing delay. When the output circuit receives an analog pixel signal that is output from output amplifier 408, the corresponding digital pixel signal is not output from output circuit 410 until a given number of clock cycles have passed. A pipeline delay horizontal shift register is used in some embodiments in accordance with the invention to compensate for the pipeline processing delay of output circuit 410. In the illustrated embodiment, pipeline delay horizontal shift register 412 has a length that corresponds to the pipeline processing delay of output circuit 410. The length of pipeline delay horizontal shift register 412 is determined so that a charge packet that is sensed by non-destructive sense node 406 and passed to pipeline delay horizontal shift register 412 is output from pipeline delay horizontal shift register 412 and arrives at charge directing switch 414 at substantially the same time or later as the digitized pixel signal is output from CDS unit 410. Pipeline delay horizontal shift register 412 can have different lengths or not be used in other embodiments in accordance with the invention.

A computing device (e.g., processor 308 in **FIG. 3**) analyzes the digital pixel signal output from output circuit 410 and transmits a switch signal on signal line 413 to charge directing switch 414. The computing device is constructed external to the image sensor die or chip in an embodiment in accordance with the invention. The computing device can be constructed on the image sensor die or chip in another embodiment in accordance with the invention.

If the digital pixel signal output from output circuit 410 represents a small amount or number of charge carriers, the switch signal on signal line 413 causes charge directing switch 414 to pass the charge packet onto charge multiplication horizontal shift register 416. The charge packet is then shifted through charge multiplying horizontal shift register 416 and input into output amplifier 418. Output amplifier 418 outputs an analog pixel signal representing the amount of charge carriers in the charge packet.

Output circuit 420 is connected to an output of output amplifier 418. Output amplifier 418 and output circuit 420 together form a "charge multiplying output channel". Output circuit 420 converts the analog pixel signal into a digital pixel signal. Output circuit 420 can perform additional processing of the pixel signal in some embodiments in accordance with the invention. Output circuit 420 is implemented as a CDS unit in an embodiment in accordance with the invention. The CDS unit can be configured in any one of multiple imp lementations.

If the digital pixel signal output from output circuit 410 represents a number of charge carriers that can saturate multiplying horizontal shift register 416, the switch signal on signal line 413 causes charge directing switch 414 to direct the charge packet to non-charge multiplying bypass horizontal shift register 422. The charge packet is then shifted through bypass horizontal shift register 422 and input into output amplifier 424. Output amplifier 424 outputs an analog voltage signal representing the amount of charge carriers in the charge packet.

Output circuit 426 is connected to an output of output amplifier 424. Output amplifier 424 and output circuit 426 together form a "charge bypass output channel". Output circuit 426 converts the analog pixel signal into a digital pixel signal. Output circuit 426 can perform additional processing of the pixel signal in some embodiments in accordance with the invention. Output circuit 426 is implemented as a CDS unit in an embodiment in accordance with the invention. The CDS unit can be configured in any one of multiple implementations.

Extended horizontal shift register 428 serves as a connecting horizontal shift register between charge directing switch 414 and charge multiplying horizontal shift register 416. Extended horizontal shift register 428 operates at low voltage levels in an embodiment in accordance with the invention. Extended horizontal shift register 428 can be omitted in other embodiments in accordance with the invention.

Image sensor 400 produces two pixel signals for each charge packet read out of pixel array 402. One pixel signal is produced by the charge sensing output channel for each charge packet. When the charge packet is directed to the charge bypass output channel, the second pixel signal is produced by the charge bypass output channel. When the charge packet is directed to the charge multiplying output channel, the second pixel signal is produced by the charge multiplying output channel.

The lengths of bypass horizontal shift register and charge multiplying horizontal shift register are designed and implemented such that a charge packet arrives at the output amplifier 424 or the output amplifier 418 on the same horizontal clock cycle in an embodiment in accordance with the invention. The computing device constructs the final image by taking the output of output amplifier 424 or of output amplifier 418 based on how the computing device directs each charge packet at the charge directing switch.

Bypass horizontal shift register can be longer or shorter than charge multiplying horizontal shift register in other embodiments in accordance with the invention. In these embodiments, the digital pixel signals output from output circuits 426 and 420 can be synchronized or re-ordered by the computing device (e.g., processor 308 in **FIG. 3**). The computing device can store the state of the switch signal for each charge packet and use that data to re-order the digital pixels signals to reproduce the image.

Output circuits 410, 420, 426 are constructed external to the image sensor die or chip in an embodiment in accordance with the invention. Some or all of the components in output circuit 410, output circuit 420, or output circuit 426 can be constructed on the image sensor die or chip in other embodiments in accordance with the invention.

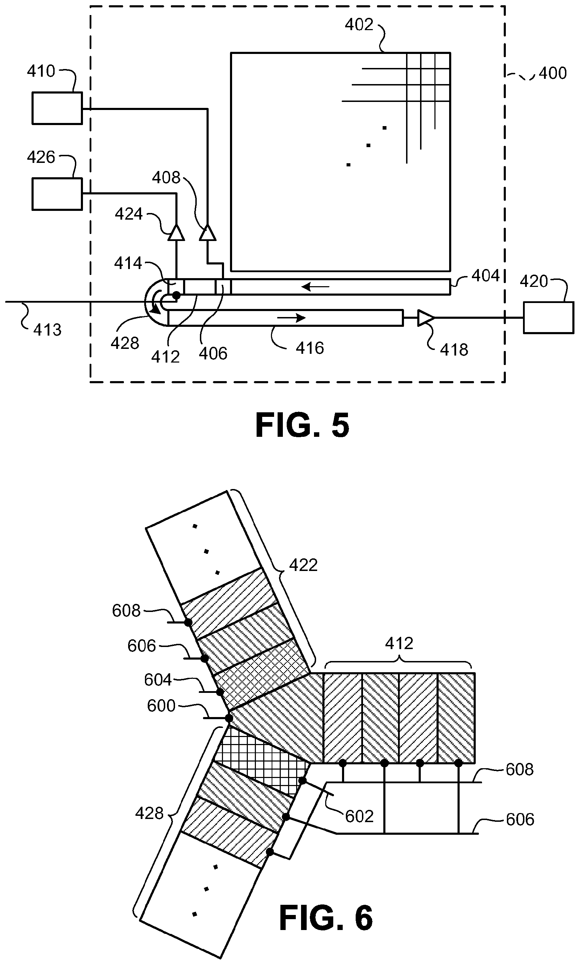

FIG. 5 is a simplified block diagram of a second CCD image sensor suitable for use as image sensor 306 shown in FIG. 3 in an embodiment in accordance with the invention. Image sensor 500 includes many of the same elements as image sensor 400 shown in **FIG. 4****,** with the exception of bypass horizontal shift register 422. Bypass horizontal shift register 422 is omitted from image sensor 500 and the input to amplifier 424 is connected to charge directing switch 414.

One advantage to the **FIG. 5** embodiment is that power is no longer needed to operate the bypass horizontal shift register. Power consumption is reduced in the image sensor 500 compared to image sensor 400 shown in **FIG. 4****.**

Referring now to **FIG. 6****,** there is shown a simplified top view of charge directing switch 414 shown in **FIG. 4** in an embodiment in accordance with the invention. Pipeline delay horizontal shift register 412, bypass horizontal shift register 422, and extended horizontal shift register 428 are shown connected to charge directing switch 414. Charge directing switch 414 includes gates 600, 602, 604 that are disposed over charge shift elements in an embodiment in accordance. Charge directing switch 414 includes two outputs, one output is associated with gate 602 and the other output is associated with gate 604.

Pipeline delay horizontal shift register 412, bypass horizontal shift register 422, and extended horizontal shift register 428 are each depicted as two phase CCD shift registers in the illustrated embodiment. Other embodiments in accordance with the invention are not limited to two phase CCD shift registers. CCD shift registers having three or more phases can be implemented in other embodiments.

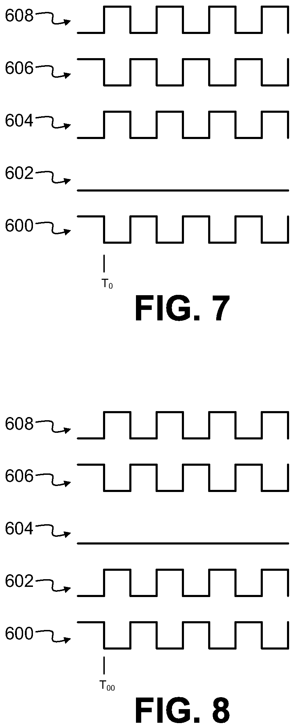

The exemplary timing diagram illustrated in **FIG. 7** is used to direct charge from pipeline delay horizontal shift register 412 to bypass horizontal shift register 422 in an embodiment in accordance with the invention. In embodiments that omit pipeline delay horizontal shift register 412, the timing diagram can be used to direct charge from non-destructive sense node 406 to bypass horizontal shift register 422. When gate 600 is clocked to a given level (e.g., a low level) at time T₀, the signal on gate 602 is held at the low level and the signal on gate 604 is clocked to a high level. When the signals on gates 600 and 602 are at the low level and the signal on gate 604 is at the high level, charge flows out of the charge shift element disposed under gate 600 and into the charge shift element under gate 604. The signals applied to the gates 606, 608 in bypass horizontal shift register 422/502 are then clocked as shown in **FIG. 7** to shift the charge packets through the bypass horizontal shift register 422.

The exemplary timing diagram depicted in **FIG. 8** is used to direct charge from pipeline delay horizontal shift register 412 to extended horizontal shift register 428. In embodiments that omit extended horizontal shift register 428, the timing diagram can be used to direct charge from pipeline delay horizontal shift register 412 to charge multiplying horizontal shift register 416. And finally, in embodiments that omit pipeline delay horizontal shift register 412, the timing diagram can be used to direct charge from non-destructive sense node 406 to either extended horizontal shift register 428 or charge multiplying horizontal shift register 416.

At time Too, gate 600 is clocked to a low level while the signal on gate 604 is held at the low level and the signal on gate 602 is clocked to a high level. When the signals on gates 600 and 604 are at the low level and the signal on gate 602 is at the high level, charge flows out of the charge shift element under gate 600 and into the charge shift element below gate 602. The signals applied to the gates 606, 608 in extended horizontal shift register 428 are then clocked as shown in **FIG. 8** to shift the charge packets through the extended horizontal shift register.

The charge directing switch illustrated in **FIG. 6** can also be used in the embodiment shown in **FIG. 5****.** Amplifier 424 is connected to the charge shift element under gate 604. The timing diagrams depicted in **FIGS. 7** and **8** can be used to direct charge packets to amplifier 424 or charge multiplying horizontal shift register 416, respectively.

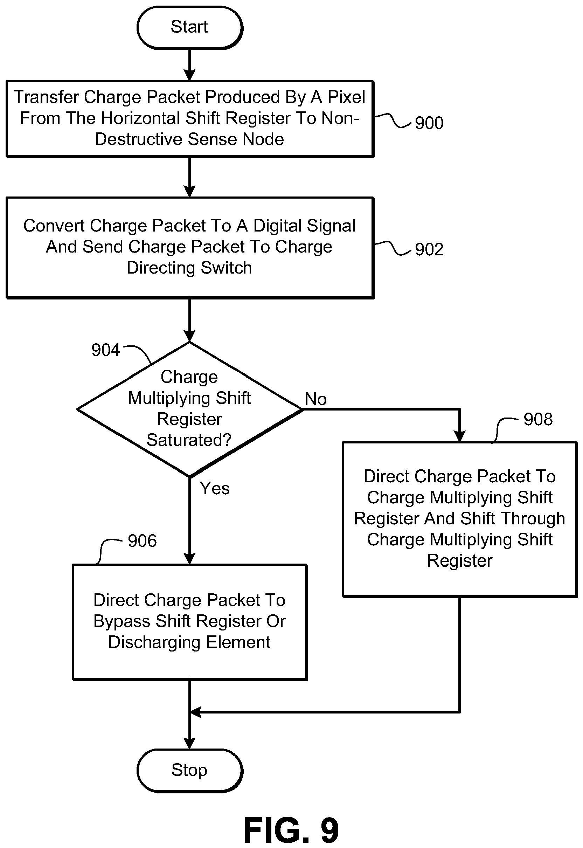

Referring now to **FIG. 9****,** there is shown a flowchart of a method for controlling the flow of charge packets in an embodiment in accordance with the invention. Initially, a charge packet is shifted to the non-destructive sense node at block 900. The charge packet is converted to a digital pixel signal representing the amount or number of charge carriers in the charge packet while the charge packet is sent to the charge directing switch (block 902). The charge packet is shifted through a pipeline delay horizontal shift register to send the charge packet to the charge directing switch in an embodiment in accordance with the invention.

A determination is then made at block 904 as to whether or not the number of charge carriers in the charge packet will saturate the charge multiplying horizontal shift register. If the charge packet will saturate the charge multiplying horizontal shift register, the process passes to block 906 where the charge packet is directed to either the bypass horizontal shift register **(****FIG. 4****)** or the discharging element **(****FIG. 5****).** If the charge carriers will not saturate the charge multiplying horizontal shift register, the charge packet is directed to the charge multiplying horizontal shift register and shifted through the charge multiplying horizontal shift register (block 908).

The method depicted in **FIG. 9** repeats for each pixel read out of the pixel array. Only charge packets that do not cause blooming are input and shifted through the charge multiplying horizontal shift register. Larger charge packets that cause blooming are directed to the bypass horizontal shift register **(****FIG. 4****)** or the discharging element **(****FIG. 5****).** In image sensors that include the charge bypass output channel, the output amplifier connected to the bypass horizontal shift register (i.e., output amplifier 424) has a noise floor that is higher than the noise floor of output amplifier connected to the charge multiplying horizontal shift register (i.e., output amplifier 418) in an embodiment in accordance with the invention. The higher noise floor is not significant because it is less than the photon shot noise contained within the large pixel value. By way of example only, the output amplifier 424 can have a charge to voltage conversion gain as high as possible to allow the output amplifier 424 to read small signals with less than N2 electrons noise. With N2 electrons noise, any signal of N2² electrons or more (the photon shot noise is the square root of the signal) would have more than N2 electrons of photon shot noise. The signal level that causes a charge packet to be directed to the bypass horizontal shift register 422 can be two to three times N2² electrons. In this example, the charge multiplying horizontal shift register 416 is not used and the charge directing switch directs all of the charge packets with more than 3xN2² electrons to the output amplifier 424. Because the output amplifier 424 may have a large charge conversion gain, the output amplifier 424 can saturate if the signal contains too much signal. In that case, the output amplifier 408 is used because the output amplifier 408 has a gain that is less than the gain of the output amplifier 424.

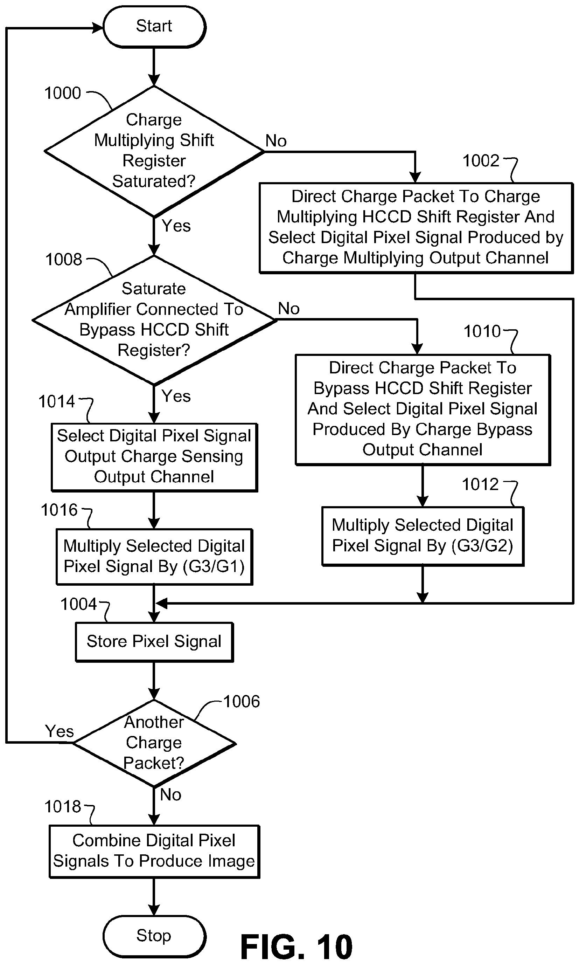

**FIG. 10** is a flowchart of a method for producing an image that can be used with the embodiment shown in **FIGS. 4** and **5****.** The value G1 represents the combined charge to voltage conversion gain of the amplifier 408 and output circuit 410. The value G2 represents the combined charge to voltage conversion gain of the output amplifier 424 and output circuit 426. And finally, the value G3 represents the combined charge to voltage conversion gain of the output amplifier 418 and output circuit 420.

Initially, a determination is made at block 1000 as to whether or not the number of charge carriers in a charge packet will saturate the charge multiplying horizontal shift register. If not, the charge packet is directed to and shifted through the charge multiplying horizontal shift register and the digital pixel signal produced by the output amplifier and output circuit connected to the charge multiplying horizontal shift register is selected as the digital pixel signal (block 1002). The digital pixel signal is then stored, as shown in block 1004. By way of example only, the digital pixel signal can be stored in memory 310 shown in **FIG. 3****.**

Next, as shown in block 1006, a determination is made as to whether or not another charge packet is to be produced by the image sensor. If so, the method returns to block 1000. When the number of charge carriers in the charge packet will saturate the charge multiplying horizontal shift register (block 1000), the process passes to block 1008 where a determination is made as to whether or not the number of charge carriers will saturate the output amplifier connected to the bypass horizontal shift register. If not, the charge packet is directed to and shifted through the bypass horizontal shift register and the digital pixel signal produced by the output amplifier and output circuit connected to the bypass horizontal shift register is selected as the digital pixel signal (block 1010). The selected digital pixel signal is then multiplied by the gain ratio (G3/G2) at block 1012 and the modified digital pixel signal stored at block 1004.

If the number of charge carriers will saturate the output amplifier connected to the bypass horizontal shift register at block 1006, the digital pixel signal produced by the amplifier connected to the non-destructive sense node is selected as the digital pixel signal (block 1014). The selected digital pixel signal is then multiplied by the gain ratio (G3/G1) at block 1016 and the modified pixel signal stored at block 1004. By way of example only, the gain ratios (G3/G2) and (G3/G1) can be applied to the selected digital pixel signals by a computing device, such as processor 308 shown in **FIG. 3****.**

When all of the charge packets are produced by the image sensor at block 1006, the method passes to block 1018 where the stored pixel signals or modified pixel signals are combined to produce an image. Embodiments in accordance with the invention can combine blocks 1004 and 1018 such that the pixel signals are stored in a location that corresponds to the location of the pixel in the image. Thus, the memory or storage unit stores a completed image when all of the charge packets have been produced by the image sensor.

One process for determining the gain ratios G3/G2 and G3/G1 used in the method shown in **FIG. 10** will now be described. The G3/G1 gain ratio can be determined from the charge packets that are directed to the charge multiplying horizontal shift register 418 and output circuit 420. Those charge packets are processed by both output circuits 410 and 420. In one embodiment in accordance with the invention, a running average of (the digital pixel signals produced by output circuit 420)/(the digital pixel signals produced by output circuit 410) is determined. This running average equals the gain ratio G3/G1. A running average is used in an embodiment because as the camera temperature changes the gain ratio G3/G1 will likely also change.

The G3/G2 gain ratio is determined by first measuring the gain ratio G1/G2 and then calculating G3/G2 = G3/G1 x G1/G2. The G1/G2 gain ratio can be determined from the charge packets that are directed to bypass horizontal shift register 422 and output circuit 426. Those charge packets are processed by both output circuits 410 and 426. A running average of (the digital pixel signals produced by output circuit 410)/(the digital pixel signals produced by output circuit 426) is determined.

Embodiments in accordance with the invention are not limited to the use of a running average. A running least squares fit average can be used in another embodiment in accordance with the invention. Those skilled in the art will appreciate that the running least squares fit average will also correct offset errors.

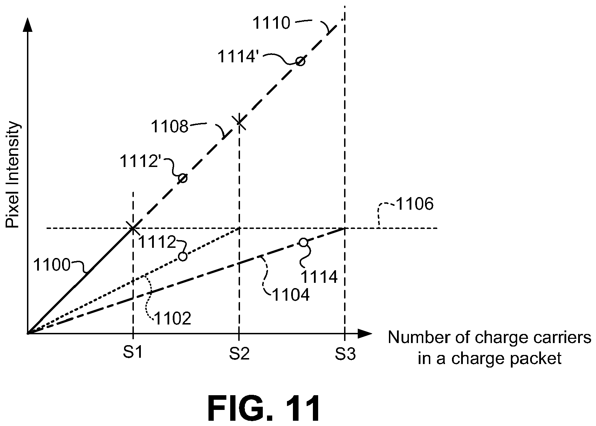

**FIG. 11** is an exemplary diagram that is used to illustrate how the signals output from the three output channels are combined to produce an image in an embodiment in accordance with the invention. Line 1100 represents the output of the charge multiplying output channel for charge packets having zero to S1 number of charge carriers. Line 1102 represents the output of the charge bypass output channel for charge packets having zero to S2 number of charge carriers. And finally, line 1104 represents the output of the charge sensing output channel for charge packets having zero to S3 number of charge carriers. The slope of each line 1100, 1102, 1104 is the output gains G3, G2, and G1, respectively.

Line 1106 represents a saturation level for the amplifiers in the different output channels (e.g., amplifiers 408, 418, 426). The pixel intensity for all output channels will not exceed this saturation level. Thus, the maximum pixel intensity for an image is limited to the intensity level represented by line 1106.

Output amplifier 418 saturates at the lowest number of charge carriers S1, output amplifier 424 at the number of charge carriers S2, and output amplifier 408 at the highest number of charge carriers S3 in the illustrated embodiment. If the number of charge carriers is between S1 and S2, the output of the charge bypass output channel is multiplied by the ratio of the slopes of the output lines 1100, 1102 (i.e., the gain ratio). If the number of charge carriers is greater than S2, the output of the charge sensing output channel is multiplied by the ratio of the slopes of lines 1104 and 1100.

The pixel signals output from some of the output channels are multiplied by a gain ratio to produce an image having a greater range of intensity values. The gain ratios, when applied to the charge packets having a number of charge carriers between S1 and S3, modify the pixel intensity values such that the intensity values fall along lines 1108 and 1110. Line 1108 is between S1 and S2 and line 1110 between S2 and S3.

By way of example only, a charge packet is output from the charge bypass output channel having a number of charge carriers that corresponds to point 1112 along line 1102. When the charge packet is multiplied by the gain ratio (G3/G2), the modified pixel intensity value corresponds to point 1112' along line 1108. A charge packet output from the charge sensing output channel has a number of charge carriers corresponding to point 1114 along line 1104. When the charge packet is multiplied by the gain ratio (G3/G1), the modified pixel intensity value corresponds to point 1114' along line 1110. Thus, the gain ratios produce modified pixel intensities that fall or substantially fall on lines 1108 and 1110, thereby producing an image with a greater range of pixel intensity values.

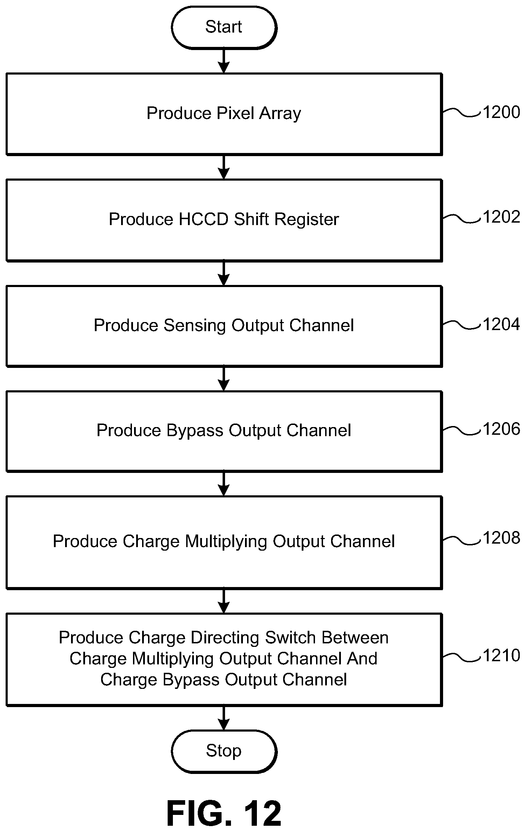

Referring now to **FIG. 12****,** there is shown a flowchart of a method for producing an image sensor in an example. Initially, a pixel array is produced, as shown in block 1200. The pixel array of photodetectors can be produced using techniques known in the art. For example, masking layers can be deposited over a substrate and each patterned to provide openings at the locations where respective components in each pixel (e.g., photodetectors) will be formed. Dopants having particular conductivity types are then implanted into the substrate to produce the components.

Next, as shown in block 1202, a horizontal CCD shift register is produced on one side of the pixel array. The horizontal CCD shift register can be produced using techniques known in the art. For example, a masking layer can be deposited over the substrate and patterned to provide openings at the locations where each shift register element, or phase in each shift register element, will be formed. A dopant having a particular conductivity type is then implanted into the substrate to produce the shift register element or phase. Barrier implants may also be formed between shift register elements or phases. Also, electrodes are produced over each shift register element or phase and electrically connected to respective voltage clocking signals that are used to shift charge packets through the horizontal CCD shift registers. Typically, the electrodes are formed in electrode layers. In a two phase CCD shift register, alternating electrodes (every other electrode) form one electrode layer and the remaining electrodes a second electrode layer. In a four phase CCD shift register, electrodes disposed over the first and third phase (or the second and fourth phase) form one electrode layer and the remaining electrodes a second electrode layer.

Next, as shown in blocks 1204, 1206, and 1208, the charge sensing output channel, the charge bypass output channel, and the charge multiplying output channel are produced. The output channels can be produced using techniques known in the art. For example, a masking layer can be deposited over the substrate and patterned to provide openings at the locations where each shift register element, or phase in each shift register element, will be formed. A dopant having a particular conductivity type is then implanted into the substrate to produce the shift register element or phase. Barrier implants may also be formed between shift register elements or phases. Also, electrodes or gates are produced over each shift register element or phase and electrically connected to respective voltage clocking signals that are used to shift charge packets through the horizontal shift registers. Typically, the gates are formed in layers. In a two phase shift register, alternating gates (every other gate) form one layer and the remaining gates a second electrode layer. In a four phase shift register, gates disposed over the first and third phase (or the second and fourth phase) form one layer and the remaining gates a second electrode layer.

And finally, the charge directing switch is produced at block 1210. The charge directing switch can be produced using techniques known in the art. For example, a masking layer can be deposited over the substrate and patterned to provide openings at the locations where each shift register element, or phase in each shift register element, will be formed. A dopant having a particular conductivity type is then implanted into the substrate to produce the shift register element or phase. Barrier implants may also be formed between shift register elements or phases. Also, the gates are produced over each shift register element or phase and electrically connected to respective voltage clocking signals that are used to direct the charge packets through a respective output of the charge directing switch.

Those skilled in the art will recognize that other embodiments in accordance with the invention can modify the order of the blocks shown in **FIG. 12****.** For example, in embodiments that do not include a charge bypass output channel, the discharging element can be produced using techniques known in the art. Multiple components included in the pixel array, horizontal shift register, charge bypass output channel, charge sensing output channel, or the charge multiplying output channel can be produced at the same time by patterning the masking layers appropriately. Embodiments that include a pipeline delay horizontal shift register or an extended horizontal shift register can produce these elements when producing the desired output channels. Additionally, other components in an image sensor can be produced in between the processes shown in **FIG. 12****.**

The invention has been described in detail with particular reference to certain embodiments thereof, but it will be understood that variations and modifications can be effected within the scope of the invention. For example, signal levels other than the signal levels shown in **FIGS. 7, 8** and **10** can be used. The charge directing switch can be implemented differently in other embodiments in accordance with the invention. An image capture device can include additional components than the components shown in **FIG. 3****.**

And even though specific embodiments of the invention have been described herein, it should be noted that the application is not limited to these embodiments. In particular, any features described with respect to one embodiment may also be used in other embodiments, where compatible. And the features of the different embodiments may be exchanged, where compatible.

### PARTS LIST

- 100: pixel array
- 102: pixel
- 105: horizontal CCD shift register
- 110: charge multiplying horizontal CCD shift register
- 120: output amplifier
- 200: output amplifier
- 300: image capture device
- 302: light
- 304: imaging stage
- 306: image sensor
- 308: processor
- 310: memory
- 312: display
- 314: other input/output (I/O)
- 400: image sensor
- 402: pixel array
- 404: horizontal shift register
- 406: non-destructive sense node
- 408: amplifier
- 410: correlated double sample unit
- 412: pipeline delay horizontal shift register
- 413: signal line
- 414: charge directing switch
- 416: charge multiplying horizontal shift register
- 418: amplifier
- 420: correlated double sample unit
- 422: bypass horizontal shift register
- 424: amplifier
- 426: correlated double sample unit
- 428: extended horizontal CCD shift register
- 600: gate
- 602: gate
- 604: gate
- 606: gate
- 608: gate
- 1100: line representing output of the charge multiplying output channel
- 1102: line representing output of the charge bypass output channel
- 1104: line representing output of the charge sensing output channel
- 1106: line representing a saturation level
- 1108: line representing pixel intensity values
- 1110: line representing pixel intensity values
- 1112: pixel intensity value
- 1112': modified pixel intensity value
- 1114: pixel intensity value
- 1114': modified pixel intensity value
- S 1: value representing a number of charge carriers
- S2: value representing a number of charge carriers
- S3: value representing a number of charge carriers

## Claims

1. An image capture device (300) comprising an image sensor (400), comprising:
a horizontal shift register (404) electrically connected to a pixel array (402) for receiving charge packets directly from the pixel array (402);
a charge directing switch (414) having an input electrically connected to an output of the horizontal shift register (404), and a control input, wherein the charge directing switch (414) includes first and second outputs and selects between the first and second outputs in response to a control signal received at the control input;
a charge multiplying horizontal shift register (416) electrically connected to the first output of the charge directing switch (414);
a bypass horizontal shift register (422) having an input electrically connected to the second output of the charge directing switch (414), and an output; and
a first amplifier (424) connected to the output of the bypass horizontal shift register (422);
**characterised in that**:
the image sensor (400) further comprises:
a non-destructive sense node (406) connected between an output of the horizontal shift register (404) and the input of the charge directing switch (414); and
a charge sensing output channel (408, 410) electrically connected to the non-destructive sense node (406) and configured to output a signal corresponding to a size of each charge packet received at the non-destructive sense node (406); and
the image capture device (300) further comprises a processor (308) electrically connected to the charge sensing output channel (408, 410), wherein for each charge packet the processor (308) transmits a switch signal to the charge directing switch (414) in response to a signal received from the non-destructive sense node (406) to direct the charge packet to the charge multiplying horizontal shift register (416) when the number of charge carriers in the charge packet will not saturate the charge multiplying horizontal shift register (416), and to the bypass horizontal shift register (422) when the charge packet will saturate the charge multiplying horizontal shift register (416).

2. The image capture device as in claim 1, further comprising a second amplifier (408) connected to the non-destructive sense node (406).

3. The image capture device as in claim 1, further comprising a pipeline delay horizontal shift register (412) connected between the non-destructive sense node (406) and the charge directing switch (414).

4. The image capture device as in claim 1, further comprising an extended horizontal shift register (428) connected between the first output of the charge directing switch (414) and the input of the charge multiplying horizontal shift register (416).

5. The image capture device as in claim 1, further comprising a third amplifier (418) connected to an output of the charge multiplying horizontal shift register (416).

6. The image capture device as in any preceding claim, further comprising:
a second amplifier (408) connected to the non-destructive sense node (406); and
a third amplifier (418) connected to an output of the charge multiplying horizontal shift register (416).

7. The image capture device as in claim 6, further comprising:
a first output circuit (426) connected to an output of the first amplifier (424);
a second output circuit (410) connected to an output of the second amplifier (408); and
a third output circuit (420) connected to an output of the third amplifier (418), wherein the first (426), second (410), and third (420) output circuits each include an analog-to-digital converter electrically connected to the outputs of the first (424), second (408), and third (418) amplifiers, respectively.

8. The image capture device as in claim 7 when dependent from claim 3, wherein a length of the pipeline delay horizontal shift register (412) is based on a pipeline delay time of the second amplifier (408) and the second output circuit (410).

## Patentansprüche

1. Bilderfassungsvorrichtung (300), umfassend einen Bildsensor (400), Folgendes umfassend:
ein horizontales Schieberegister (404), das elektrisch an eine Pixelmatrix (402) angeschlossen ist, um Ladungspakete direkt von der Pixelmatrix (402) zu empfangen;
einen ladungsleitenden Schalter (414), der einen Eingang, der elektrisch an einen Ausgang des horizontalen Schieberegisters (404) angeschlossen ist, und einen Steuereingang aufweist, wobei der ladungsleitende Schalter (414) einen ersten und einen zweiten Ausgang enthält und als Reaktion auf ein am Steuereingang empfangenes Steuersignal zwischen dem ersten und dem zweiten Ausgang auswählt;
ein ladungsvervielfachendes horizontales Schieberegister (416), das elektrisch an den ersten Ausgang des ladungsleitenden Schalters (414) angeschlossen ist;
ein horizontales Bypass-Schieberegister (422), das einen elektrisch an den zweiten Ausgang des ladungsleitenden Schalters (414) angeschlossenen Eingang und einen Ausgang aufweist; und
einen ersten Verstärker (424), der an den Ausgang des horizontalen Bypass-Schieberegisters (422) angeschlossen ist;
**dadurch gekennzeichnet, dass**:
der Bildsensor (400) ferner Folgendes umfasst:
einen zerstörungsfreien Abtastknoten (406), der zwischen einem Ausgang des horizontalen Schieberegisters (404) und dem Eingang des ladungsleitenden Schalters (414) angeschlossen ist; und
einen ladungsabtastenden Ausgangskanal (408, 410), der elektrisch an den zerstörungsfreien Abtastknoten (406) angeschlossen ist und konfiguriert ist, ein Signal, das einer Größe jedes am zerstörungsfreien Abtastknoten (406) empfangenen Ladungspakets entspricht, auszugeben; und
die Bilderfassungsvorrichtung (300) ferner einen Prozessor (308), der elektrisch an den ladungsabtastenden Ausgangskanal (408, 410) angeschlossen ist, umfasst, wobei der Prozessor (308) als Reaktion auf ein von dem zerstörungsfreien Abtastknoten (406) empfangenes Signal für jedes Ladungspaket ein Umschaltsignal an den ladungsleitenden Schalter (414) überträgt, um das Ladungspaket an das ladungsvervielfachende horizontale Schieberegister (416) zu leiten, wenn die Anzahl von Ladungsträgern in dem Ladungspaket das ladungsvervielfachende horizontale Schieberegister (416) nicht sättigt, und an das horizontale Bypass-Schieberegister (422), wenn das Ladungspaket das ladungsvervielfachende horizontale Schieberegister (416) sättigt.

2. Bilderfassungsvorrichtung nach Anspruch 1, ferner umfassend einen zweiten Verstärker (408), der an den zerstörungsfreien Abtastknoten (406) angeschlossen ist.

3. Bilderfassungsvorrichtung nach Anspruch 1, ferner ein horizontales Pipeline-Verzögerungs-Schieberegister (412), das zwischen dem zerstörungsfreien Abtastknoten (406) und dem ladungsleitenden Schalter (414) angeschlossen ist, umfassend.

4. Bilderfassungsvorrichtung nach Anspruch 1, ferner ein erweitertes horizontales Schieberegister (428), das zwischen dem ersten Ausgang des ladungsleitenden Schalters (414) und dem Eingang des ladungsvervielfachenden horizontalen Schieberegisters (416) angeschlossen ist, umfassend.

5. Bilderfassungsvorrichtung nach Anspruch 1, ferner einen dritten Verstärker (418), der an einen Ausgang des ladungsvervielfachenden horizontalen Schieberegisters (416) angeschlossen ist, umfassend.

6. Bilderfassungsvorrichtung nach einem der vorhergehenden Ansprüche, ferner Folgendes umfassend:
einen zweiten Verstärker (408), der an den zerstörungsfreien Abtastknoten (406) angeschlossen ist; und
einen dritten Verstärker (418), der an einen Ausgang des ladungsvervielfachenden horizontalen Schieberegisters (416) angeschlossen ist.

7. Bilderfassungsvorrichtung nach Anspruch 6, ferner Folgendes umfassend:
einen ersten Ausgangskreis (426), der an einen Ausgang des ersten Verstärkers (424) angeschlossen ist;
einen zweiten Ausgangskreis (410), der an einen Ausgang des zweiten Verstärkers (408) angeschlossen ist; und
einen dritten Ausgangskreis (420), der an einen Ausgang des dritten Verstärkers (418) angeschlossen ist, wobei der erste (426), der zweite (410) und der dritte (420) Ausgangskreis jeweils einen Analog-Digital-Wandler, der elektrisch an die Ausgänge des ersten (424), des zweiten (408) beziehungsweise des dritten (418) Verstärkers angeschlossen ist, enthält.

8. Bilderfassungsvorrichtung nach Anspruch 7, wenn abhängig von Anspruch 3, wobei eine Länge des horizontalen Pipeline-Verzögerungs-Schieberegisters (412) auf einer Pipeline-Verzögerungszeit des zweiten Verstärkers (408) und des zweiten Ausgangskreises (410) basiert.

## Revendications

1. Dispositif de capture d'image (300) comprenant un capteur d'image (400), comprenant :
un registre à décalage horizontal (404) connecté électriquement à une matrice de pixels (402) pour recevoir des paquets de charge directement de la matrice de pixels (402);
un commutateur d'orientation de charge (414) ayant une entrée connectée électriquement à une sortie du registre à décalage horizontal (404), et une entrée de commande, dans lequel le commutateur d'orientation de charge (414) comporte des première et seconde sorties et choisit entre les première et seconde sorties en réponse à un signal de commande reçu au niveau de l'entrée de commande ;
un registre à décalage horizontal à multiplication de charge (416) connecté électriquement à la première sortie du commutateur d'orientation de charge (414) ;
un registre à décalage horizontal de dérivation (422) ayant une entrée connectée électriquement à la seconde sortie du commutateur d'orientation de charge (414), et une sortie ; et
un premier amplificateur (424) connecté à la sortie du registre à décalage horizontal de dérivation (422) ;
**caractérisé en ce que**:
le capteur d'image (400) comprend en outre:
un noeud de détection non destructif (406) connecté entre une sortie du registre à décalage horizontal (404) et l'entrée du commutateur d'orientation de charge (414) ; et
un canal de sortie de détection de charge (408, 410) connecté électriquement au noeud de détection non destructif (406) et configuré pour délivrer en sortie un signal correspondant à une taille de chaque paquet de charge reçu au niveau du noeud de détection non destructif (406) ; et
le dispositif de capture d'image (300) comprend en outre un processeur (308) connecté électriquement au canal de sortie de détection de charge (408, 410), dans lequel, pour chaque paquet de charge, le processeur (308) transmet un signal de commutation au commutateur d'orientation de charge (414) en réponse à un signal reçu du noeud de détection non destructif (406) pour orienter le paquet de charge vers le registre à décalage horizontal à multiplication de charge (416) lorsque le nombre de porteurs de charge dans le paquet de charge ne saturera pas le registre à décalage horizontal à multiplication de charge (416), et vers le registre à décalage horizontal de dérivation (422) lorsque le paquet de charge saturera le registre à décalage horizontal à multiplication de charge (416).

2. Dispositif de capture d'image selon la revendication 1, comprenant en outre un deuxième amplificateur (408) connecté au noeud de détection non destructif (406).

3. Dispositif de capture d'image selon la revendication 1, comprenant en outre un registre à décalage horizontal à retard de pipeline (412) connecté entre le noeud de détection non destructif (406) et le commutateur d'orientation de charge (414).

4. Dispositif de capture d'image selon la revendication 1, comprenant en outre un registre à décalage horizontal étendu (428) connecté entre la première sortie du commutateur d'orientation de charge (414) et l'entrée du registre à décalage horizontal à multiplication de charge (416).

5. Dispositif de capture d'image selon la revendication 1, comprenant en outre un troisième amplificateur (418) connecté à une sortie du registre à décalage horizontal à multiplication de charge (416).

6. Dispositif de capture d'image selon l'une quelconque des revendications précédentes, comprenant en outre :
un deuxième amplificateur (408) connecté au noeud de détection non destructif (406) ; et
un troisième amplificateur (418) connecté à une sortie du registre à décalage horizontal à multiplication de charge (416).

7. Dispositif de capture d'image selon la revendication 6, comprenant en outre :
un premier circuit de sortie (426) connecté à une sortie du premier amplificateur (424) ;
un deuxième circuit de sortie (410) connecté à une sortie du deuxième amplificateur (408) ; et
un troisième circuit de sortie (420) connecté à une sortie du troisième amplificateur (418), dans lequel le premier (426), le deuxième (410) et le troisième (420) circuit de sortie comportent chacun un convertisseur analogique-numérique connecté électriquement aux sorties du premier (424), du deuxième (408) et du troisième (418) amplificateur, respectivement.

8. Dispositif de capture d'image selon la revendication 7 lorsqu'elle dépend de la revendication 3, dans lequel une longueur du registre à décalage horizontal à retard de pipeline (412) est basée sur un temps de retard de pipeline du deuxième amplificateur (408) et du deuxième circuit de sortie (410).
